# EUROPEAN PATENT APPLICATION

(11) **EP 1 865 739 A1**
(43) Date of publication of application: **12.12.2007**
(21) Application number: 07000874.3
(22) Date of filing: 17.01.2007
(51) Int. Cl.: H04Q 7/38

(54) **Method and system for enabling reception of targeted services to a handheld communication device**

(30) Priority: 07.06.2006 US 422657
(71) Applicant: Broadcom Corporation, Irvine, CA 92617 (US)
(72) Inventor: Kirke, Tony, 94116 San Francisco, CA (US)
(74) Representative: Jehle, Volker Armin

(57) **Abstract**

Methods and systems for communicating information by a communication device are disclosed and may include detecting a handheld communication device that may detect a first network in a first location. The handheld communication device may establish a connection with and utilize the first network. In exchange for utilizing the first network, the handheld communication device may receive messages associated with the first location. When the handheld communication device is moved from the first location to a second location, the handheld may detect a second network at the second location. The handheld communication device may establish a connection with and utilize the second network. In exchange for utilizing the second network, the handheld communication device may receive messages associated with the second location. The first location and the second location may be places of business such as, for example, a store.

## Description

### CROSS-REFERENCE TO RELATED APPLICATIONS/INCORPORATION BY REFERENCE

This application makes reference to:
United States Patent Application Serial No. (Attorney Docket No. 17149US01) filed on even date herewith;
United States Patent Application Serial No. (Attorney Docket No. 17150US01) filed on even date herewith;
United States Patent Application Serial No. (Attorney Docket No. 17151US01) filed on even date herewith;
United States Patent Application Serial No. (Attorney Docket No. 17152US01) filed on even date herewith;
United States Patent Application Serial No. (Attorney Docket No. 17153US01) filed on even date herewith; and
United States Patent Application Serial No. (Attorney Docket No. 17155US01) filed on even date herewith.

Each of the above stated applications is hereby incorporated herein by reference in its entirety.

### FIELD OF THE INVENTION

Certain embodiments of the invention relate to communication of information within a network. More specifically, certain embodiments of the invention relate to a method and system for enabling reception of targeted services to a handheld.

### BACKGROUND OF THE INVENTION

Wireless technology is revolutionizing personal connectivity by providing freedom from wired connections. Conventional wireless connectivity protocols for handheld communication devices, such as Bluetooth®, may provide a small form-factor, low-cost radio solution which may support links between computers, mobile phones and/or other portable and handheld communication devices. Bluetooth® wireless technology is an international, open standard for allowing intelligent devices to communicate with each other through wireless, short-range communications. The Bluetooth® technology allows a Bluetooth® compliant device, such as a Bluetooth®-enabled computer, computer mouse, computer keyboard, speakers, or a handheld communication device, for example, to support its own connections, without wires, cables or any direct action from a user. Bluetooth® is currently incorporated into numerous commercial products including laptops, PDAs, cell phones, keyboards, and printers, for example.

Bluetooth® handheld communication devices, such as mobile telephones and PDAs, are evolving to become more complex as such devices may be adapted to transmit and receive audio and/or video information. However, communicating data, such as audio and video data between Bluetooth®-enabled devices via a Bluetooth® connection requires increased power consumption and may be achieved at data rates that are slower than data rates offered by high-speed connections. Furthermore, conventional wireless connectivity standards for handheld communication devices, such as the Bluetooth® standard, are effective within a limited distance range.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for enabling reception of targeted services to a handheld, substantially as shown in and/or described in connection with at least one of the figures, as set forth more completely in the claims.
According to an aspect of the invention, a method is provided for communicating information in a communication system, the method comprising:
detecting by a first wireless handheld communication device (WHCD), a first wireless network at a first location comprising a first wireless access device;
establishing by said first WHCD, a communication link with the first wireless network via the first wireless access device; and
receiving by said first WHCD, when the first WHCD is within operating range of the first wireless network at the first location, wirelessly targeted services offered by the first wireless network at the first location, in exchange for the first WHCD being granted free access rights to utilize the first network to access another network communicatively coupled to the first wireless network at the first location.
Advantageously, the first location comprises a place of business.
Advantageously, the wirelessly targeted services comprise advertisements related to services offered by the place of business.
Advantageously, said first location comprises a store.
Advantageously; the wirelessly targeted services comprise advertisements related to merchandise offered by the store.
Advantageously, the method further comprises receiving at least one of: voice, video and data from the first wireless network at the first location via the first wireless access device.
Advantageously, the method further comprises storing identification information of the first WHCD whenever access rights are granted to access the first wireless network.
Advantageously, the method further comprises granting access rights to the first WHCD to access the first wireless network at the first location whenever the first WHCD is subsequently within operating range of said first wireless network at the first location based on the stored identification information of the first WHCD.
Advantageously, the method further comprises granting access rights to the first WHCD to access the first wireless network at the first location for a limited period of time.
Advantageously, the method further comprises denying access to the first wireless network at the first location by the first WHCD, whenever the first WHCD refused to accept at least a portion of the wirelessly targeted services offered by the first wireless network.
Advantageously, the method further comprises providing to an operator of the first wireless network, information related to wirelessly targeted services that are preferred by a user of the first WHCD.
Advantageously, the method further comprises receiving from the first wireless network, wirelessly targeted services that meet a criteria specified by the preference by the user of the first WHCD.
According to an aspect of the invention, a system is provided for communicating information in a communication system, the system comprising:
at least one processor that enables detection by a first wireless handheld communication device (WHCD) of a first wireless network at a first location comprising a first wireless access device;
said at least one processor enables establishment by said first WHCD of a communication link with the first wireless network via the first wireless access device; and
said at least one processor enables reception by said first WHCD, when the first WHCD is within operating range of the first wireless network at the first location of wirelessly targeted services offered by the first wireless network at the first location, in exchange for the first WHCD being granted free access rights to utilize the first network to access another network communicatively coupled to the first wireless network at the first location.
Advantageously, the first location comprises a place of business.
Advantageously, the wirelessly targeted services comprise advertisements related to services offered by the place of business.
Advantageously, said first location comprises a store.
Advantageously, the wirelessly targeted services comprise advertisements related to merchandise offered by the store.
Advantageously, the system further comprises said at least one processor enables reception of at least one of: voice, video and data from the first wireless network at the first location via the first wireless access device.
Advantageously, the system further comprises said at least one processor enables storage of identification information of the first WHCD whenever access rights are granted to access the first wireless network.
Advantageously, the system further comprises said at least one processor enables granting access rights to the first WHCD to access the first wireless network at the first location whenever the first WHCD is subsequently within operating range of said first wireless network at the first location based on the stored identification information of the first WHCD.
Advantageously, the system further comprises said at least one processor enables granting access rights to the first WHCD to access the first wireless network at the first location for a limited period of time.
Advantageously, the system further comprises said at least one processor enables denying access to the first wireless network at the first location by the first WHCD, whenever the first WHCD refused to accept at least a portion of the wirelessly targeted services offered by the first wireless network.
Advantageously, the system further comprises said at least one processor enables providing to an operator of the first wireless network, information related to wirelessly targeted services that are preferred by a user of the first WHCD.
Advantageously, the system further comprises said at least one processor enables receiving from the first wireless network, wirelessly targeted services that meet a criteria specified by the preference by the user of the first WHCD.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating communication between a plurality of handheld communication devices in an ad-hoc network, in accordance with an embodiment of the invention.

FIG. 2 is a diagram illustrating a plurality of ad-hoc networks comprising handheld communication devices, in accordance with an embodiment of the invention.

FIG. 3 is a diagram illustrating communication of information between handheld communication devices, in accordance with an embodiment of the invention.

FIG. 4 is a diagram illustrating communication of information between handheld communication devices, in accordance with an embodiment of the invention.

FIG: 5 is a diagram illustrating wireless communication of information by a handheld communication device, in accordance with an embodiment of the invention.

FIG. 6 is a flowchart illustrating exemplary steps for communicating information within a network, in accordance with an embodiment of the invention.

### DETAILED DESCRIPTION OF THE INVENTION

Certain embodiments of the invention may be found in a method and system for enabling reception of targeted services to a handheld. In one embodiment of the invention, a handheld communication device may detect a first network at a first location, and establish a communication link with the detected first network. The handheld communication device may then utilize the first network in exchange for allowing the first network to send messages associated with the location of the first network to the handheld communication device. The first network may be located in a store in a mall or a department in a store, for example. The messages sent to the first handheld communication device may be, for example, advertisements or coupons associated with the location where the first network may be present. When the handheld communication device is moved from one location to another, the handheld communication device may detect a second network at the other location, and may establish a connection with the second network in exchange for allowing messages associated with the location of the second network, which may be, for example, another store in the mall or another department within the store.

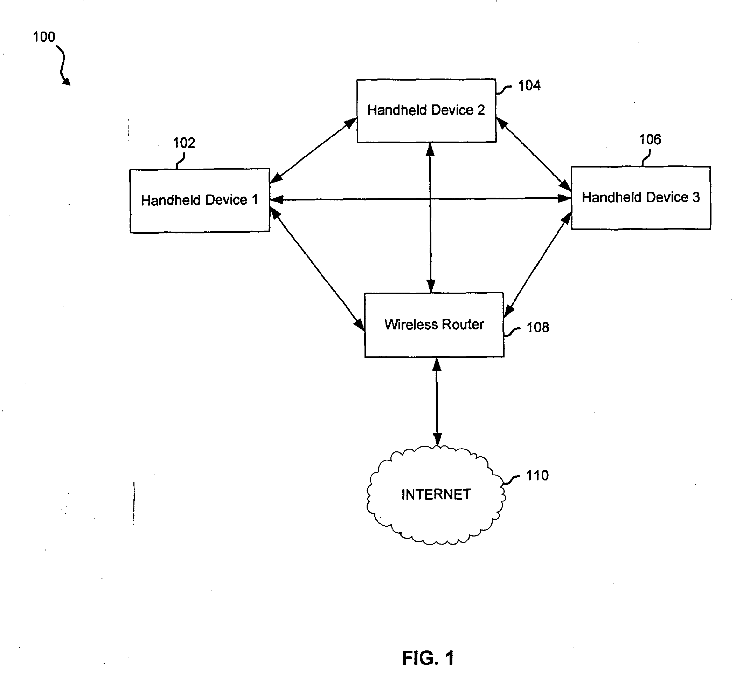

FIG. 1 is a diagram illustrating communication between a plurality of handheld communication devices in an ad-hoc network, in accordance with an embodiment of the invention. Referring to FIG. 1, the ad-hoc network 100 may comprise a plurality of handheld communication devices, such as handheld communication devices 102, 104, and 106. The handheld communication devices 102, 104, and 106 may each comprise suitable circuitry, logic, and/or code and may communicate information wirelessly within the ad-hoc network 100. For example, handheld communication devices 102, 104, and 106 may communicate voice or data between each other over extended ranges, without the use of a network device, such as an access point, a base station, a bridge, a router, and/or a switch, for example, to facilitate such communication. The extended range may be much greater than the range provided by Bluetooth.

In one embodiment of the invention, handheld communication devices 102, 104, and 106 may utilize instant messaging (IM), to communicate data within the ad-hoc network 100. For example, during an initial formation of the ad-hoc network 100, the handheld communication device 102 may detect the presence of the handheld communication device 104. Handheld communication devices 102 and 104 may then exchange identification information related to the devices 102 and 104 and/or to the corresponding users of the devices 102 and 104. For example, handheld communication devices 102 and 104 may exchange user identification information. After handheld communication devices 102 and 104 exchange user identification information and authenticate each other, a connection may be established for a wireless exchange of data between the handheld communication devices 102 and 104. In one embodiment of the invention, the connection may be utilized to filtrate a messaging session such as, for example, an instant messaging session between devices.

After an IM wireless connection is established between handheld communication devices 102 and 104, a third handheld communication device 106, located within operating range of handheld communication devices 102 and 104, may be detected by device 102 and/or device 104. After handheld communication device 106 is detected by handheld communication device 102 and/or handheld communication device 104, identification information may be exchanged between handheld communication device 106 and handheld communication devices 102 and 104. Handheld communication device 106 may then be accepted within the ad-hoc network 100 and IM communication may be established between handheld communication devices 102,104, and 106.

In another embodiment of the invention, handheld communication devices 102, 104, and 106 may each communicate with the wireless router 108. The wireless router 108 may be communicatively coupled to the Internet 110. In this regard, one or more of the handheld communication devices 102, 104, and 106 may operate both within the ad-hoc network 100 and within an infrastructure network comprising, for example, the router 108 and one or more devices communicatively coupled to the Internet 110.

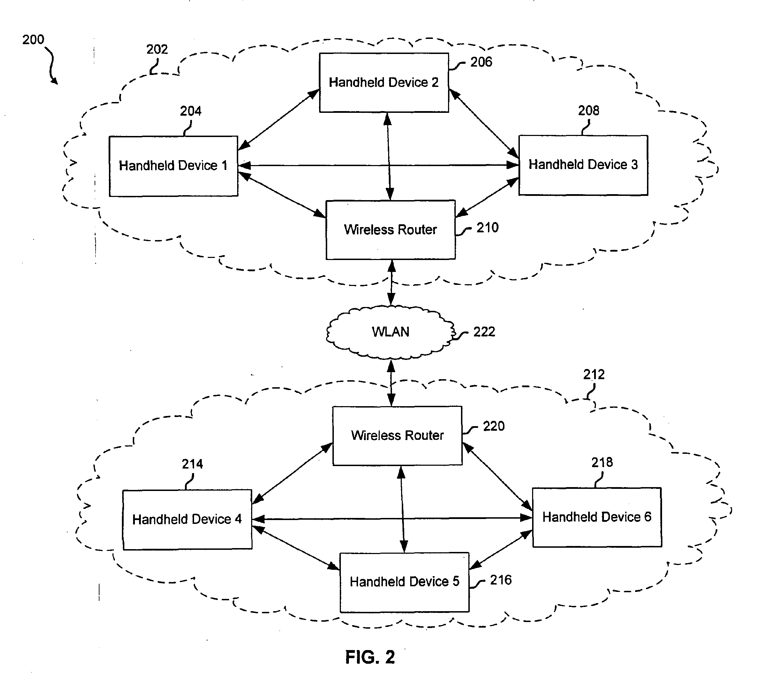

**FIG. 2** is a diagram illustrating a plurality of ad-hoc networks comprising handheld communication devices, in accordance with an embodiment of the invention. Referring to **FIG. 2,** the communication infrastructure 200 may comprise ad-hoc networks 202 and 212. The ad-hoc network 202 may comprise a plurality of handheld communication devices, such as handheld communication devices 204, 206, and 208. The handheld communication devices 204, 206, and 208 may each comprise suitable circuitry, logic, and/or code and may communicate information wirelessly over an extended range within the ad-hoc network 202. For example, handheld communication devices 204, 206, and 208 may communicate voice or data between each other over extended ranges, without the use of a network device, such as an access point, a base station, a bridge, a router, and/or a switch, for example, to facilitate such communication. The extended range may be much greater than the range provided by Bluetooth.

Similarly, the ad-hoc network 212 may comprise a plurality of handheld communication devices, such as handheld communication devices 214, 216, and 218. The handheld communication devices 214, 216, and 218 may each comprise suitable circuitry, logic, and/or code and may communicate information wirelessly within the ad-hoc network 212. For example, handheld communication devices 214, 216, and 218 may communicate voice or data between each other over extended ranges, without the use of a network device, such as an access point, a base station, a bridge, a router, and/or a switch, for example, to facilitate such communication. The extended ranges may be much greater than the range provided by Bluetooth.

In one exemplary embodiment of the invention, handheld communication devices 204, 206, and 208 may utilize instant messaging (IM) to wirelessly communicate data over an extended range within the ad-hoc network 202 when the devices are within operating range of each other. Similarly, handheld communication devices 214, 216, and 218 may utilize, for example, instant messaging (IM) to communicate data within the ad-hoc network 212. One or more of the handheld communication devices 204, 206, and 208, within ad-hoc network 202, and handheld communication devices 214, 216, and 218, within ad-hoc network 212, may communicate with the wireless routers 210 and 220, respectively. The wireless routers 210 and 220 may be communicatively coupled to a wireless local area network (WLAN) 222. In this regard, one or more of the handheld communication devices 204, ..., 208 may simultaneously communicate information to one or more handheld communication devices within the ad-hoc network 202, and to one or more handheld communication device within the ad-hoc network 212, via the wireless routers 210, 220 and the WLAN 222. Similarly, one or more of the handheld communication devices 214, ..., 218 may communicate information within the ad-hoc network 212 and with one or more handheld communication device within the ad-hoc network 202, via the wireless routers 210, 220 and the WLAN 222.

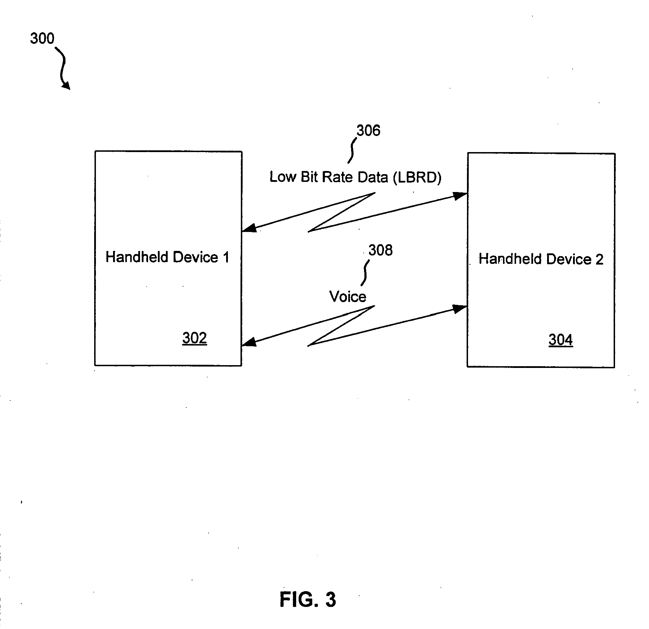

**FIG. 3** is a diagram illustrating communication of information between handheld communication devices, in accordance with an embodiment of the invention. Referring to FIG. 3, handheld communication devices 302 and 304 may form an ad-hoc network 300. In this regard, handheld communication devices 302 and 304 may exchange information without using an intermediate communication device, such as an access point, a base station, a bridge, a router, and/or a switch that facilitates communication between the handheld communication devices 302 and 304. The handheld communication devices 302 and 304 may comprise, for example, a cell phone or a personal digital assistant (PDA). Furthermore, the handheld communication devices 302 and 304 may communicate low bit-rate data (LBRD) 306 and/or voice data 308. The LBRD 306 may be exchanged during, for example, an instant messaging (IM) connection established between the handheld communication devices 302 and 304.

In operation, the handheld communication device 302 may detect the presence of the handheld communication device 304 when the latter is within operating range of the former. Handheld communication devices 302 and 304 may then exchange identification information related to the devices 302 and 304 and/or identification information related to the corresponding users of the devices 302 and 304. After handheld communication devices 302 and 304 exchange user identification information and authenticate each other, a connection may be established between handheld communication devices 302 and 304 for a wireless exchange of LBRD 306 and/or exchange of voice information 308.

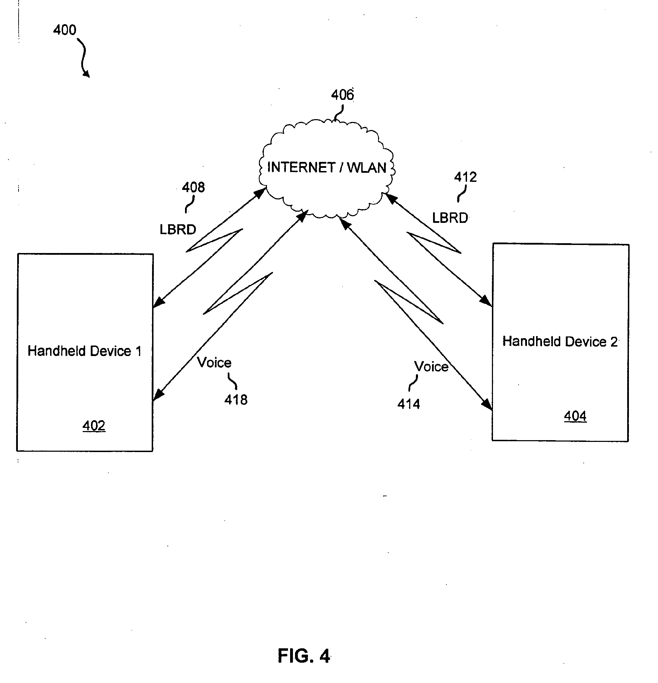

**FIG. 4** is a diagram illustrating communication of information between handheld communication devices, in accordance with an embodiment of the invention. Referring to **FIG. 4,** handheld communication devices 402 and 404 may form a communication infrastructure 400. The communication infrastructure 400 may also comprise the Internet or a WLAN 406. The handheld communication devices 402 and 404 may exchange information via the Internet or WLAN 406. The handheld communication devices 402 and 404 may comprise, for example, a cell phone or a personal digital assistant (PDA). Furthermore, the handheld communication devices 402 and 404 may communicate low bit-rate data (LBRD) 408 and 412 and/or voice data 418 and 414.

For example, LBRD 408 may be communicated between the Internet/WLAN 406 and the handheld communication device 402, and LBRD 412 may be communicated between the Internet/WLAN 406 and the handheld communication device 404. Similarly, voice data 418 may be communicated between the Internet/WLAN 406 and the handheld communication device 402, and voice data 414 may be communicated between the Internet/WLAN 406 and the handheld communication device 404. The LBRD 408 and 412 may be exchanged during, for example, an instant messaging (IM) connection established between the handheld communication devices 402 and 404 via the Internet/WLAN 406.

In operation, the handheld communication device 402 may detect the presence of the handheld communication device 404 via the Internet/WLAN 406. Handheld communication devices 402 and 404 may then exchange identification information related to the devices 402 and 404 and/or identification information related to the corresponding users of the handheld communication devices 402 and 404. After handheld communication devices 402 and 404 exchange user identification information and authenticate each other, a connection may be established between handheld communication devices 406 and 408 via the Internet/WLAN 406 for a wireless exchange of LBRD 408 and 412 and/or exchange of voice information 418 and 414.

In one embodiment of the invention, handheld communication device 402 may store identification information of handheld communication device 404, prior to pairing the devices 402 and 404 or prior to establishing any connection or communication between the devices 402 and 404 when the latter is within operating range of the former. In this regard, handheld communication device 404 may be "pre-authorized" to communicate with handheld communication device 402. In instances when handheld communication device 404 is pre-authorized for communication with handheld communication device 402, an ad-hoc network connection may be established between devices 402 and 404 at the time handheld communication device 402 detects handheld communication device 404.

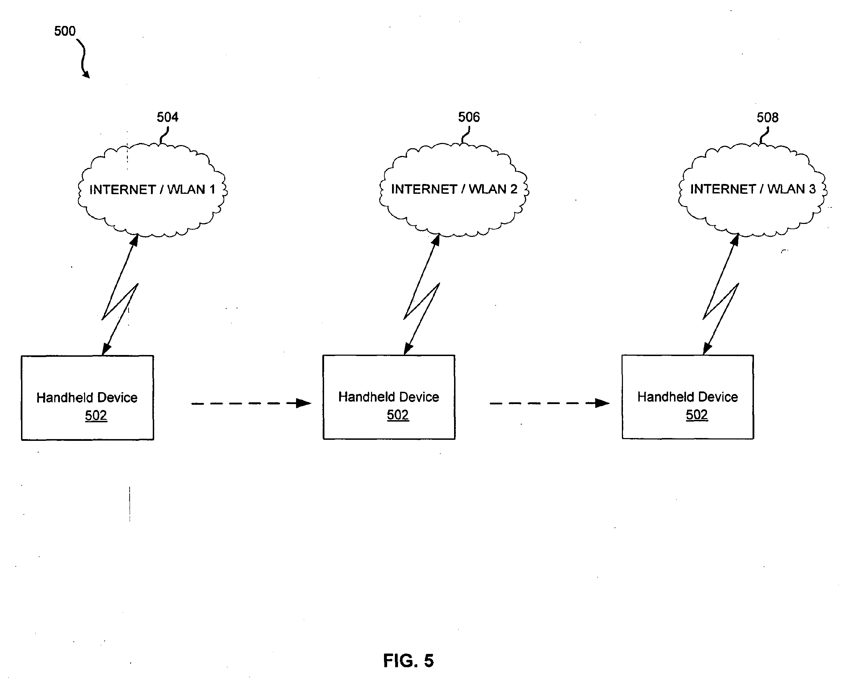

FIG. 5 is a diagram illustrating wireless communication of information by a handheld communication device, in accordance with an embodiment of the invention. Referring to **FIG. 5,** the communication infrastructure 500 may comprise the handheld communication device 502 and the Internet or WLANs 504, 506, and 508. The communication device 502 may comprise suitable circuitry, logic, and/or code and may communicate information wirelessly within the communication infrastructure 500. The Internet/WLANs 504, 506, and 508 may be accessed via access points in the associated locations. The WLANs 504, 506, and 508 may be the same WLAN with different access points in the different locations. Utilizing an access point associated with a specific location to access the Internet may trigger receiving messages associated with the specific locations.

For example, information may be communicated between the Internet/WLANs 504, 506, and 508, and the handheld communication device 502. In operation, the handheld communication device 502 may detect the presence of the Internet/WLAN 504 while in operating range of an access device communicatively coupled to the Internet/WLAN 504. The handheld communication device 502 may then establish a communication link with the Internet/WLAN 504. The handheld communication device 502 may then utilize the Internet/WLAN 504 to communicate messages and information to the Internet and to other communication devices connected to the Internet. In exchange for using the Internet/WLAN 504, the entity that provides access to the Internet/WLAN 504 may send messages to the handheld communication device 502 regarding the entity. For example, the entity may be a store within a mall, and the messages may be advertisements associated with the store in which the Internet/WLAN 504 is accessed.

As the handheld communication device 502 roams from one location to another, the handheld communication device 502 may detect the Internet/WLAN associated with other locations. For example, when the handheld communication device moves from the store where the Internet/WLAN 504 is present, to a store where the Internet/WLAN 506 is present, the handheld communication device 502 may detect the Internet/WLAN 506 and establish a communication link with the Internet/WLAN 506. The handheld communication device 502 may then utilize the Internet/WLAN 506 in exchange for receiving messages from the location associated with the Internet/WLAN 506, such as advertisements for the store where the internet/WLAN 506 is. Similarly, the handheld communication device 502 may roam to another location such as, for example, a store, where the Internet/WLAN 508 is and may establish a connection in exchange for receiving messages/advertisements associated with the store where the Internet/WLAN 508 is.

In an embodiment of the present invention, the different locations may be different departments within the same store. When the handheld communication device 502 roams from one department to another, the handheld communication device 502 may receive advertisements and messages associated with the specific department in exchange for using the Internet/WLAN in that department. Information about which departments/stores/locations were visited may be collected and utilized as a basis for sending particular advertisements to the user of the handheld communication device 502.

In an embodiment of the present invention, the different locations may register the identification of the handheld communication device 502 and use it for future marketing information. A handheld communication device may be registered with a certain location and may be authorized to utilize the Internet/WLAN in that certain location every time the handheld communication device is within the range of the Internet/WLAN of the location.

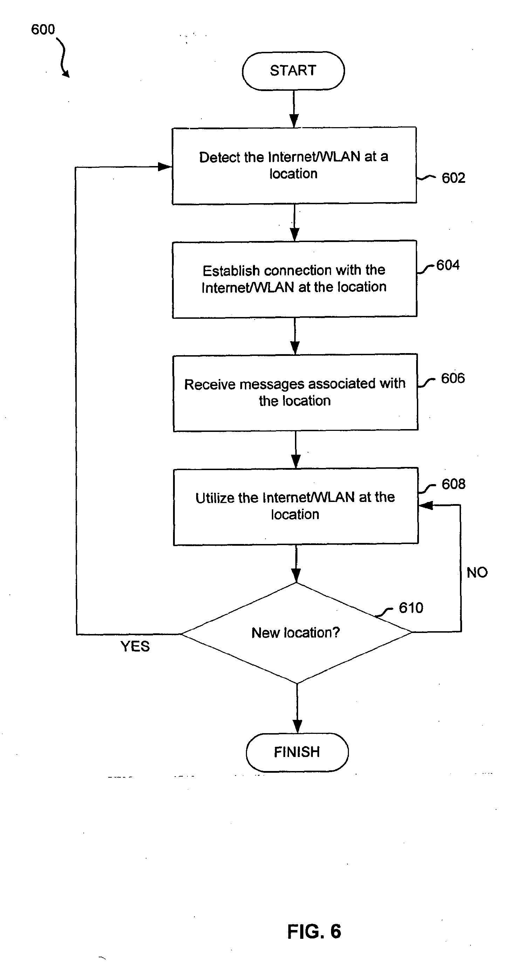

**FIG. 6** is a flowchart 600 illustrating exemplary steps for communicating information within a network, in accordance with an embodiment of the invention. Referring to **FIGS. 5 and 6,** at 602, the handheld communication device 502 may roam into a location and detect the Internet/WLAN at the current location. The location may be, for example, a place of business with a wireless access device broadcasting the Internet/WLAN. The handheld communication device 502 may then establish a connection with the lnternet/WLAN at the current location via the wireless access device at 604. Messages associated with the current location may then be received by the handheld communication device 502 at 606. The messages may comprise, for example, advertisements and marketing information and other messages related to the services offered by the current location. The current location may be a place of business, for example, a store within a mall or a department within a store, and the messages may be related to the merchandise offered by the store or the department within the store. Once the handheld communication device 502 accepts the messages, it may utilize the Internet/WLAN at the current location at 608. As the handheld communication device roams, the handheld communication device may determine whether it is at a new location at 610. If at a new location, the handheld communication device may return to 602 to determine whether the Internet/WLAN may be available at the new location. Otherwise, if not at a new location, the handheld communication device may continue to utilize the Internet/WLAN at the current location.

In an embodiment of the invention, identification information associated with the handheld communication device may be stored the first time the handheld communication device establishes a connection to the Internet/WLAN in a location. Whenever the handheld communication device is within operating range of the Internet/WLAN at the location, the connection to the Internet/WLAN at the location may be granted to the handheld communication device based on the store identification information. Access to the Internet/WLAN at the location may be in some instances granted for a limited period of time. Additionally, the handheld communication device may refuse to accept at least a portion of the messages sent by a location, in which case access to the Internet/WLAN at the location may be denied to the handheld communication device.

In an embodiment of the invention, a user of the handheld communication device may provide certain preferences for services or products to an operator of the network in a location where the user may desire to access the Internet/WLAN. When the user of the handheld communication device attempts to establish a connection to the Internet/WLAN in the location, only messages associated with the specified preferences may be sent to the handheld communication device.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments failing within the scope of the appended claims.

## Claims

1. A method for communicating information in a communication system, the method comprising:
detecting by a first wireless handheld communication device (WHCD), a first wireless network at a first location comprising a first wireless access device;
establishing by said first WHCD, a communication link with the first wireless network via the first wireless access device; and
receiving by said first WHCD, when the first WHCD is within operating range of the first wireless network at the first location, wirelessly targeted services offered by the first wireless network at the first location, in exchange for the first WHCD being granted free access rights to utilize the first network to access another network communicatively coupled to the first wireless network at the first location.

2. The method according to claim 1, wherein the first location comprises a place of business.

3. The method according to claim 2, wherein the wirelessly targeted services comprise advertisements related to services offered by the place of business.

4. The method according to claim 1, wherein said first location comprises a store.

5. The method according to claim 4, wherein the wirelessly targeted services comprise advertisements related to merchandise offered by the store.

6. The method according to claim 1, further comprising receiving at least one of: voice, video and data from the first wireless network at the first location via the first wireless access device.

7. A system for communicating information in a communication system, the system comprising:
at least one processor that enables detection by a first wireless handheld communication device (WHCD) of a first wireless network at a first location comprising a first wireless access device;
said at least one processor enables establishment by said first WHCD of a communication link with the first wireless network via the first wireless access device; and
said at least one processor enables reception by said first WHCD, when the first WHCD is within operating range of the first wireless network at the first location of wirelessly targeted services offered by the first wireless network at the first location, in exchange for the first WHCD being granted free access rights to utilize the first network to access another network communicatively coupled to the first wireless network at the first location.

8. The system according to claim 7, wherein the first location comprises a place of business.

9. The system according to claim 8, wherein the wirelessly targeted services comprise advertisements related to services offered by the place of business.

10. The system according to claim 7, wherein said first location comprises a store.
